# EUROPEAN PATENT APPLICATION

(11) **EP 1 997 605 A2**
(43) Date of publication of application: **03.12.2008**
(21) Application number: 08156715.8
(22) Date of filing: 22.05.2008
(51) Int. Cl.: B29C 45/76

(54) **Mold clamping force measuring sensor**

(30) Priority: 30.05.2007 JP 2007143226
(71) Applicant: Sysko Corporation, Saitama-ken 340-0027 (JP)
(72) Inventor: Shimoda, Toshio, Saitama-ken 340-0027 (JP); Shimoda, Masami, Saitama-ken 340-0027 (JP); Beppu, Masaharu, Saitama-ken 340-0027 (JP)
(74) Representative: Murgatroyd, Susan Elizabeth

(57) **Abstract**

The present invention provides a mold clamping force measuring sensor 1 in which a pair of square bar-like and semielliptical annulus-like sensor holders 2, 3 which hold a strain sensor 5 are connected by a hinge 4 to provide an elliptical annulus-like configuration as a whole which surrounds the outer circumference of a tie bar 50. On the hinged side, a first positioning tool 11 which includes an end block 12, a projection piece 15 for drop prevention that is projected from this end block 12, and is clamped and fixed by a clamping screw 10, and both-side face plates 17 which are fixed to both side faces of the end block 12, and are tightly contacted with both side faces of the sensor holders 2, 3 are provided. On the open side, a second positioning tool 21 which includes an end block 22, a circumferential direction misalignment prevention piece 24 which is faced to between the end faces of both sensor holders 2, 3, and is clamped and fixed by a clamping screw 10, and both-side face plates 26 which arc fixed to the side faces of the end block 22, and arc tightly contacted with both side faces of the sensor holders 2, 3 are provided.

## Description

The present invention relates to a mold clamping force measuring sensor, and particularly to a mold clamping force detection sensor for measuring the mold clamping force of a mold clamping apparatus, such as that in an injection molding machine, or the like.

For example, the mold which is used in an injection molding machine, or the like, is generally divided into two or more sections, and at the time of molding, they are clamped to one another in use. In addition, with the mold clamping apparatus, tie bars are connected to the mold supporting mechanism part for the mold, and to these tie bars, a mold clamping force is applied with a strain due to that force being generated therein. Up to now, various mold clamping force detection sensors including a strain sensor for measuring the strain in the tie bar that is tightly contacted with the tie bar have been proposed.

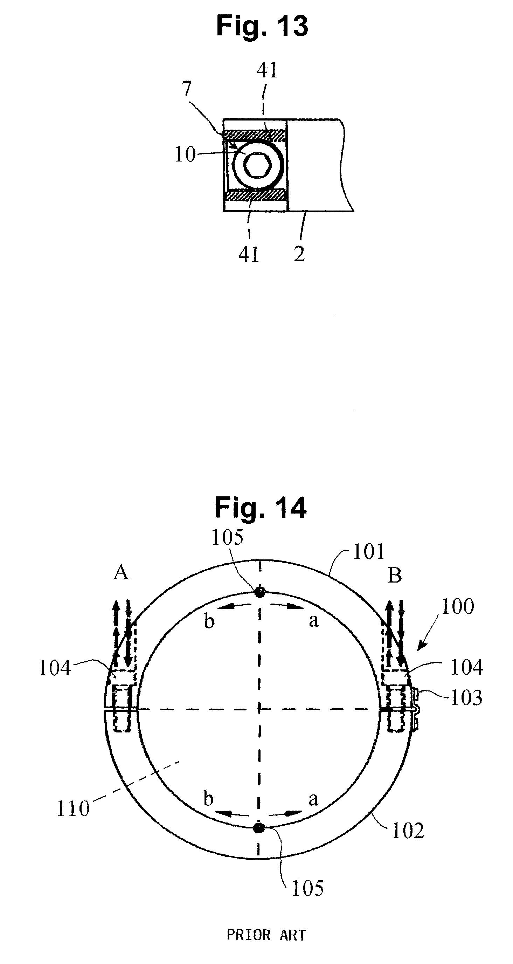

With reference to FIG. 14 to FIG. 16, a conventional mold clamping force detection sensor 100 will be described. With the mold clamping force detection sensor 100 as shown in the same figures, a semicircular annulus-like first sensor holder 101 and a semicircular annulus-like second sensor holder 102 are connected to each other by a hinge 103; in the state in which these are opposed to each other so as to surround the outer circumference of the tie bar 110. These are clamped on the hinged side and the open side, respectively, by means of bolts 104 which are disposed in the locations diametrically opposed to each other; and with strain sensors 105 which are provided in the first sensor holder 101 and second sensor holder 102, the strain generated in said tie bar 110 is measured.

In the case of this conventional mold clamping force detection sensor 100, as shown in FIG. 14 and FIG. 15, the bolt 104 on the open side (side "A") is first tightened to some degree, and then the bolt on the hinged side (side "B") is tightened. However, it is very difficult to uniformly tighten them and a seesaw phenomenon is created, in which tightening the bolt 104 on the side "A" will cause the strain sensor 105 to be displaced to the side "a", while tightening the bolt 104 on the side "B" will cause the strain sensor 105 to be displaced to the side "b", resulting in the position of the strain sensor 105 being shifted in the circumferential direction. At the same time, as shown in FIG. 16, a twist may be caused in the strain sensor 105, and further, the first sensor holder 101 and the second sensor holder 102 may be misaligned to form a stepwise arrangement.

As a result of this, various problems, such as unstable output from the strain sensor 105, a failure of the strain sensor 105 itself and a film (not shown) for protecting the strain sensor 105, and instability of the mounting postures of the first sensor holder 101 and the second sensor holder 102, may occur, which can make it difficult to measure the mold clamping force applied to the tie bar 110 with high accuracy.

Japanese patent publication No. 3493017 proposes a measuring sensor which includes a measuring element, being configured like a ring, and which is installed, being clamped onto the outer circumference of a columnar member with clamping elements, such as clamping screws, or the like, for measuring the elongation of said columnar member.

However, also in the case of this measuring sensor, clamping elements, such as clamping screws, or the like, are used, and thus there is a possibility of that the same problems as described above may be presented.

Conventionally, there have been no mold clamping force measuring sensors having an annulus-like configuration that are free from various problems, such as unstable output from the strain sensor, failure of the strain sensor, and the like, and instability of the mounting posture of the sensor holder, and that allow the mold clamping force of a tie bar to be measured with high accuracy.

According to one aspect of the present invention, there is provided a mold clamping force measuring sensor in which one square bar-like and semielliptical annulus-like sensor holder which holds a measuring element facing the internal circumferential surface, and the other square bar-like and semielliptical annulus-like sensor holder which holds a measuring element facing the internal circumferential surface are openably connected by hinge connection at one end sides of these to provide an elliptical annulus-like configuration as a whole, with said both sensor holders being installed on the outer circumference of a tie bar; at each opposite end part on the hinged side and the open side, which is the other end side, a clamping screw being driven in to clamp and fix the mold clamping force measuring sensor on the outer circumference of the tie bar for measuring the mold clamping force applied to the tie bar with said measuring element, wherein a first positioning tool is provided which, on said hinged side, includes an end block which is located outside of said hinge, having a thickness equivalent to that of the sensor holder; a projection piece for drop prevention that is projected from this end block, and is clamped and fixed by a clamping screw; a pair of side face plates which are fixed to both side faces of said end block, and are tightly contacted with both side faces of said sensor holders, and a second positioning tool is provided which, on said open side, includes an end block which is located outside of the end parts of said both sensor holders, having a thickness equivalent to that of the sensor holder; a circumferential direction misalignment prevention piece which is faced to between the end faces of both sensor holders, and is clamped and fixed by a clamping screw; and a pair of side face plates which are fixed to both side faces of said end block, and are tightly contacted with both side faces of said sensor holders.

### Effects of the Invention

According to the invention as stated in claim 1, a mold clamping force measuring sensor with which the first positioning tool and the second positioning tool disposed on the hinged side and the open side of both sensor holder prevent misalignment in the direction along the thickness of both sensor holders and misalignment in the circumferential direction thereof, whereby stabilization of the output of the measuring element, and prevention of damage to the measuring element and the protection film can be achieved, and the measuring element can measure the mold clamping force of a tie bar with high accuracy can be implemented.

According to the invention as stated in claim 2, a mold clamping force measuring sensor with which the first positioning tool having a projection piece for drop prevention and side face plates that is disposed on the hinged side of both sensor holders, and the second positioning tool having a circumferential direction misalignment prevention piece and side face plates that is disposed on the open side prevent misalignment in the direction along the thickness of both sensor holders and misalignment in the circumferential direction thereof, whereby stabilization of the output of the measuring element, and prevention of damage to the measuring element and the protection film can be achieved, and the strain sensor can measure the mold clamping force of a tie bar with high accuracy can be implemented, and in addition, drop prevention of the first positioning tool can also be realized.

According to the invention as stated in claim 3, a mold clamping force measuring sensor which provides the same effects as the invention as stated in claim 2, and has a configuration in which, in the first positioning tool, a projection piece for drop prevention and side face plates are mounted to the end block by screw fastening, and in the second positioning tool, a circumferential direction misalignment prevention piece and side face plates are mounted to the end block by screw fastening, thus including first and second positioning tools which are easy to be assembled and disassembled, can be implemented.

According to the invention as stated in claim 4, a mold clamping force measuring sensor with which the positioning keys which are disposed on the hinged side and the open side of both sensor holders prevent misalignment in the direction along the thickness of both sensor holders and misalignment in the circumferential direction thereof, whereby stabilization of the output of the measuring element, and prevention of damage to the measuring element and the protection film can be achieved, and the strain sensor can measure the mold clamping force of a tie bar with high accuracy can be implemented.

According to the invention as stated in claim 5, a mold clamping force measuring sensor having a configuration in which, at each opposite end part on the respective hinged side and open side, positioning keys of one-pair configuration that are fixed to the opposite end part on one sensor holder side, and are fitted into the opposite end part on the other sensor holder side, being disposed on both sides of said clamping screw, are installed, which provides the same effects as the invention as stated in claim 4, can be implemented.

According to the invention as stated in claim 6, a mold clamping force measuring sensor having a configuration in which, at each opposite end part on the hinged side, positioning keys of one-pair configuration that are fixed to the opposite end part on one sensor holder side, and are fitted into the opposite end part on the other sensor holder side, being disposed on both sides of said clamping screw, and at each opposite end part on the open side, positioning keys of one-pair configuration that are fixed to the opposite end part on one sensor holder side, and are fitted into the opposite end part on the other sensor holder side, being disposed on both sides of said clamping screw, and that have a projection part for prevention of misalignment in the circumferential direction on the outer edge side thereof facing the other sensor holder are installed, which provides the same effects as the invention as stated in claim 5, can be implemented.

### Best Mode for Carrying Out the Invention

It is the purpose of the present invention to provide a mold clamping force measuring sensor which is free from various troubles, such as unstable output from the strain sensor, failure of the strain sensor, and the like, and instability of the mounting posture of the sensor holder, and which allows the mold clamping force of a tie bar to be measured with high accuracy.
The present invention has implemented and achieved the above-stated purpose with a mold clamping force measuring sensor in which one square bar-like and semielliptical annulus-like sensor holder which, in the vicinity of both end faces, is provided with a screw insertion recess communicating with a threaded through hole penetrating to the end face, respectively, and holds a strain sensor facing the internal circumferential surface, and the other square bar-like and semielliptical annulus-like sensor holder which, in both end faces, is provided with a screw accepting hole opposed to the threaded through hole provided in said one semicircular annulus-like sensor holder, respectively, and holds a strain sensor facing the internal circumferential surface, are openably connected by hinge connection at one end sides of these to provide an elliptical annulus-like configuration as a whole, with said both sensor holders being installed on the outer circumference of a tie bar; at each opposite end part on the hinged side and the open side, which is the other end side, a clamping screw being driven in from said threaded through hole side to said screw accepting hole side to clamp and fix the mold clamping force measuring sensor on the outer circumference of the tie bar for measuring the mold clamping force applied to the tie bar with said strain sensor, wherein a first positioning tool is provided which, on said hinged side, includes an end block which is located outside of said hinge, having a thickness equivalent to that of the sensor holder; a projection piece for drop prevention that is projected from this end block, having a screw insertion hole, and being butted against the top surface of the threaded through hole in the screw insertion recess, and is clamped and fixed by a clamping screw penetrating through said screw insertion hole; and a pair of side face plates which are fixed to both side faces of said end block, and are tightly contacted with both side faces of said sensor holders, and a second positioning tool is provided which, on said hinged side, includes an end block which is located outside of said hinge, having a thickness equivalent to that of the sensor holder; a circumferential direction misalignment prevention piece which is carried by this end block, being faced to between the end faces of both sensor holders, and is clamped and fixed by a clamping screw; and a pair of side face plates which are fixed to both side faces of said end block, and are tightly contacted with both side faces of said sensor holders.

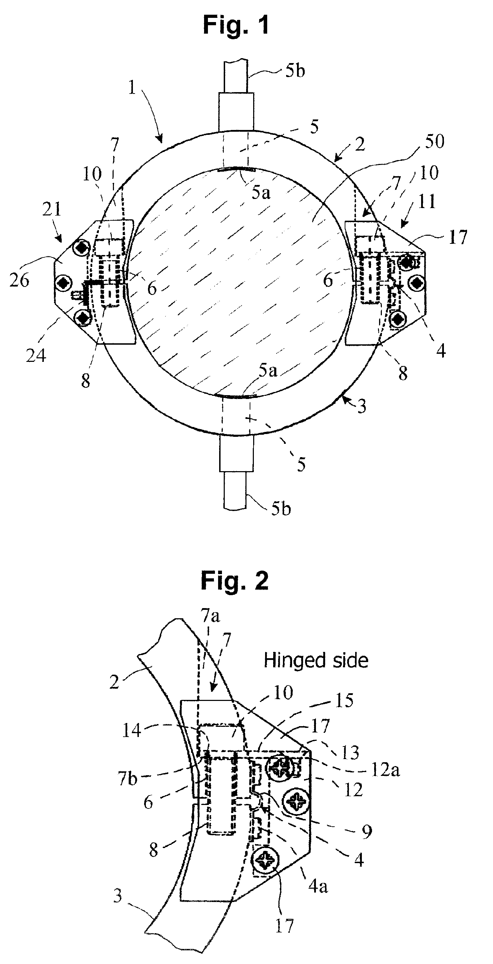

Hereinbelow, a mold clamping force measuring sensor pertaining to exemplary embodiments of the present invention will be described in detail with reference to the attached drawings. In the drawings:-
FIG. 1 is a schematic front view of the mold clamping force measuring sensor pertaining to the exemplary embodiment 1 of the present invention;
FIG. 2 is a partially enlarged front view illustrating the first positioning tool on the hinged side of the mold clamping force measuring sensor pertaining to the exemplary embodiment 1 of the present invention;

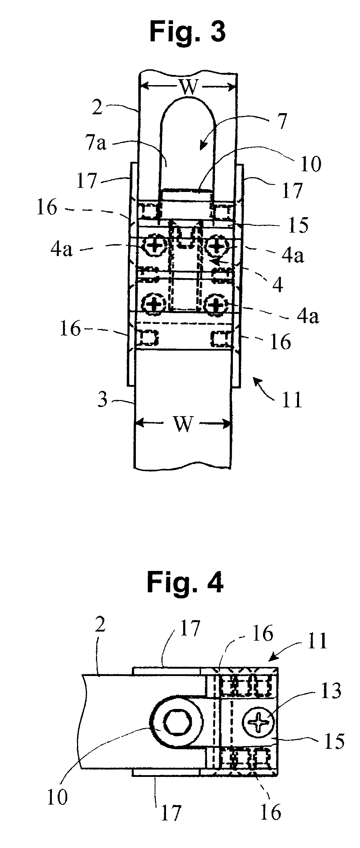

FIG. 3 is a partially enlarged side view illustrating the first positioning tool on the hinged side of the mold clamping force measuring sensor pertaining to the exemplary embodiment 1 of the present invention;
FIG. 4 is a partially enlarged top view illustrating the first positioning tool on the hinged side of the mold clamping force measuring sensor pertaining to the exemplary embodiment 1 of the present invention;

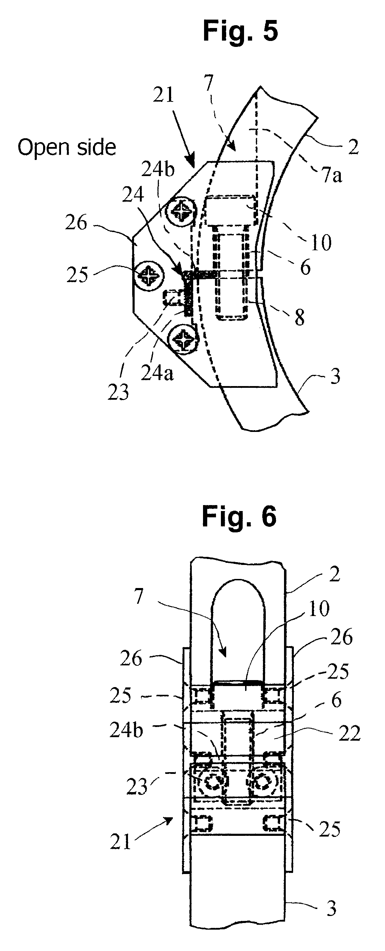

FIG. 5 is a partially enlarged front view illustrating the second positioning tool on the open side of the mold clamping force measuring sensor pertaining to the exemplary embodiment 1 of the present invention;
FIG. 6 is a partially enlarged side view illustrating the second positioning tool on the open side of the mold clamping force measuring sensor pertaining to the exemplary embodiment 1 of the present invention;

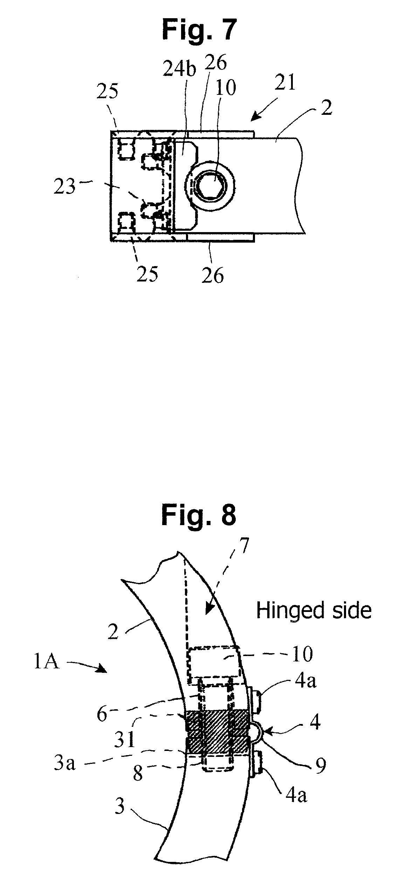

FIG. 7 is a partially enlarged top view illustrating the second positioning tool on the open side of the mold clamping force measuring sensor pertaining to the exemplary embodiment 1 of the present invention;
FIG. 8 is a partially enlarged front view illustrating the positioning key on the hinged side of the mold clamping force measuring sensor pertaining to the exemplary embodiment 2 of the present invention;

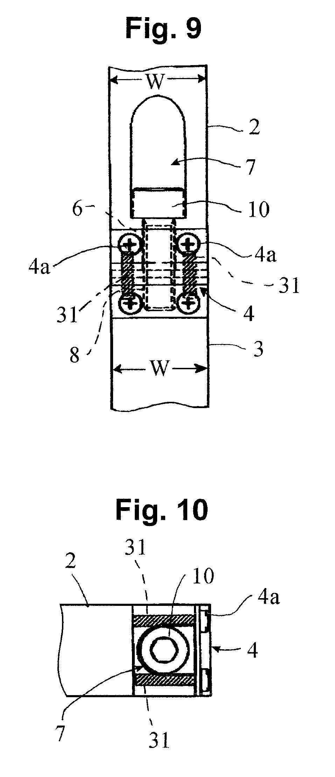

FIG. 9 is a partially enlarged side view illustrating the positioning key on the hinged side of the mold clamping force measuring sensor pertaining to the exemplary embodiment 2 of the present invention;
FIG. 10 is a partially enlarged top view illustrating the positioning key on the hinged side of the mold clamping force measuring sensor pertaining to the exemplary embodiment 2 of the present invention;

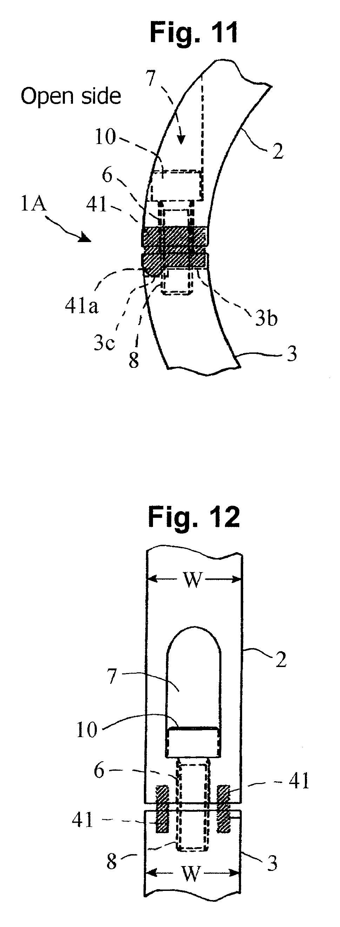

FIG. 11 is a partially enlarged front view illustrating the positioning key on the open side of the mold clamping force measuring sensor pertaining to the exemplary embodiment 2 of the present invention;
FIG. 12 is a partially enlarged side view illustrating the positioning key on the open side of the mold clamping force measuring sensor pertaining to the exemplary embodiment 2 of the present invention;
FIG. 13 is a partially enlarged top view illustrating the positioning key on the open side of the mold clamping force measuring sensor pertaining to the exemplary embodiment 2 of the present invention;
FIG. 14 is a schematic front view illustrating the clamped state provided by using bolts in the conventional mold clamping force detection sensor;

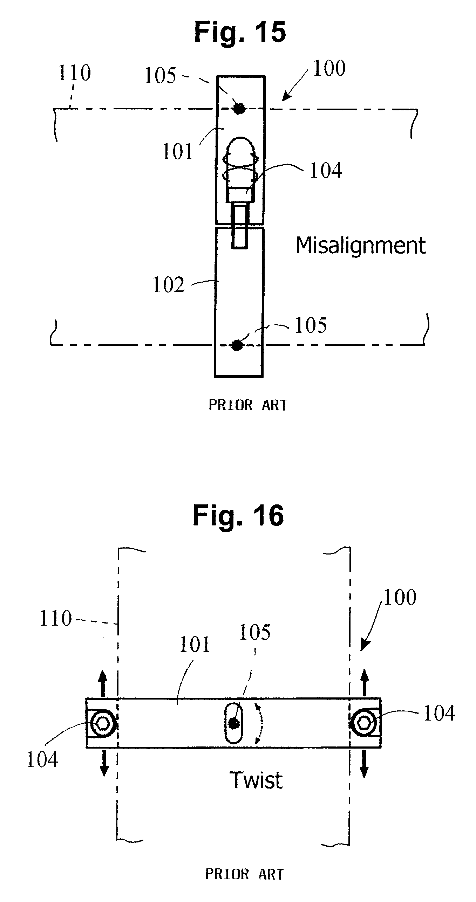

FIG. 15 is a schematic side view of the conventional mold clamping force detection sensor; and
FIG. 16 is a schematic top view of the conventional mold clamping force detection sensor.

### (Exemplary embodiment 1)

With reference to FIG. 1 to FIG. 7, a mold clamping force measuring sensor 1 pertaining to an exemplary embodiment 1 of the present invention will be described. As shown in FIG. 1, further in FIG. 2 to FIG. 4 , and FIG. 5 to FIG. 7, the mold clamping force measuring sensor 1 pertaining to the present exemplary embodiment 1 is configured to provide an elliptical annulus-like shape as a whole by using a hinge 4 for openably connecting one sensor holder 2 which is square bar-like and semielliptical annulus-like, having a thickness of W and containing a strain sensor 5 made up of, for example, a strain gage in the central portion, with the other sensor holder 3 which is square bar-like and semielliptical annulus-like, having a thickness of W and containing a strain sensor 5 made up of, for example, a strain gage in the central portion, at one end of these. It is configured such that both sensor holders 2, 3 are installed on the outer circumference of a tie bar 50 which is connected to a mold supporting mechanism part (not shown) used with a mold, for measuring the mold clamping force applied to the tie bar 50 with the strain sensor 5.
In FIG. 1, 5a denotes a protection film for the strain sensor 5 that is affixed to the inner circumference of the sensor holder 2, and 5b a signal cable.

More particularly, with the one sensor holder 2, in the vicinity of both end faces, a screw insertion recess 7 communicating with a threaded through hole 6 which penetrates to the end face is provided, and in the central portion, the strain sensor 5 facing the internal circumferential surface is held. With the other sensor holder 3, both end faces are provided with a screw accepting hole 8, respectively, that is opposed to the threaded through hole 6 provided for the one sensor holder 2, and in the central portion, the strain sensor 5 facing the internal circumferential surface is held.

Both sensor holders 2, 3 are installed on the outer circumference of the tie bar 50, and at the respective opposite end parts on the hinged side and the open side, which is the other end side, a clamping screw 10 is driven in from the threaded through hole 6 side to the screw accepting hole 8 side, for clamping and fixing both sensor holders 2, 3 to the outer circumference of the tie bar 50 to tightly contact the strain sensor 5 with the outer circumference of the tie bar 50 such that the mold clamping force applied to the tie bar 50 can be measured by means of the strain sensor 5.

The hinge 4 is made up of an elastic rubber piece 9 which is, for example, substantially quadrangular and in the form of a thin plate, and by using the hinge 4 and four setscrews 4a, the respective one ends of both sensor holders 2, 3 are connected openably in the circumferential direction (the direction in which the other ends of the sensor holders 2, 3 are separated from or brought close to each other).

The screw insertion recess 7 includes a recessed part 7a which is formed in the same direction as the threaded through hole 6 such that the clamping screw 10 can be installed, and a top surface 7b of the threaded through hole that communicates with the threaded through hole 6, and is orthogonal to the threading direction of the threaded through hole 6.

As shown in FIG. 1 to FIG. 4, the mold clamping force measuring sensor 1 pertaining to the present exemplary embodiment 1 is further provided with a first positioning tool 11 on the hinged side, and a second positioning tool 21 on the open side.
As shown in FIG. 2 to FIG. 4, the first positioning tool 11 in the mounted state on the hinged side includes an end block 12 which is located outside of the hinge 4, having a thickness, W, equivalent to that of the sensor holder, and is in the shape of a substantially rectangular prism. It also includes a projection piece 15 for drop prevention that is connected to one end face 12a of this end block 12, using a screw 13, that is projected toward the side of the threaded through hole 6, being in the shape of a rectangle, except for the projection end part, which is in the shape of a semi-circle, and that has a screw insertion hole 14 through which the threaded part of the clamping screw 10 can penetrate. There is also a pair of side face plates 17 which are fixed to both side faces of the end block 12 in the direction along the thickness thereof, using, for example, three side face screws 16, respectively, and are tightly contacted with both side faces of the sensor holders 2, 3 on the hinged side, respectively.

As shown in FIG. 5 to FIG. 7, the second positioning tool 21 in the mounted state on the open side includes an end block 22 which is located outside of the end parts of both sensor holders 2, 3, having a thickness, W, equivalent to that of the sensor holders 2, 3, and is in the shape of a substantially rectangular prism. It also includes an L-shaped circumferential direction misalignment prevention piece 24 which bottom piece 24a is connected to the central portion of this end block 22, using a screw 23, which projection piece 24b is faced to between the end faces of both sensor holders 2, 3, and which is clamped and fixed by said clamping screw 10. On the open side of the sensor holders 2, 3, there is also a pair of side face plates 26 which are fixed to both side faces of the end block 22 in the direction along the thickness thereof, using, for example, three side face screws 25, respectively, and are tightly contacted with both side faces of the sensor holders 2, 3 on the open side, respectively.

Next, the operation of measuring the mold clamping force applied to the tie bar 50 with the mold clamping force measuring sensor 1 pertaining to the present exemplary embodiment 1 will be described mainly in connection with the first positioning tool 11 and the second positioning tool 21.

With the mold clamping force measuring sensor 1 pertaining to the present exemplary embodiment 1, both sensor holders 2, 3 are first installed on the outer circumference of the tie bar 50 by pivoting them about the hinge 4 to open them in the circumferential direction, without the first positioning tool 11 and second positioning tool 21 being mounted. Both sensor holders 2, 3 are installed on the outer circumference of the tie bar 50 such that they are disposed in the shape of a substantially elliptical annulus.

Next, the one sensor holder 2 is mounted on the hinged side. At this time, the projection piece 15 for the first positioning tool 11 is disposed on the top surface 7b of the threaded through hole in the screw insertion recess 7 in the sensor holder 2 such that the screw insertion hole 14 is aligned with the threaded through hole 6, and both side face plates 17 are tightly contacted with both side faces of the sensor holders 2, 3 on the hinged side, respectively.

In this state, the clamping screw 10 is disposed in the screw insertion recess 7, and using a clamping tool, such as a hex wrench, or the like, the clamping screw 10 is driven in into the threaded through hole 6 and the screw accepting hole 8, while being passed through the screw insertion hole 14, for fixing the projection piece 15 to the top surface 7b of the threaded through hole in tight contact.

Thus, by both side face plates 17, any misalignment in the direction along the thickness between both side faces of the sensor holders 2, 3 on the hinged side that would be caused in driving in the clamping screw 10 is positively prevented.

In addition, because the projection piece 15 in the first positioning tool 11 is fixed in tight contact with the top surface 7b of the threaded through hole in the screw insertion recess 7 by the clamping screw 10 penetrating the screw insertion hole 14, the first positioning tool 11 is positively mounted to the sensor holder 2 on the hinged side. Thus, the possibility that the first positioning tool 11 may be dropped from the hinged side is eliminated, and the misalignment prevention function of both side face plates 17 in the direction along the thickness can be positively provided.

On the other hand, to both sensor holders 2, 3 on the open side, the second positioning tool 21 is mounted. In other words, the projection piece 24b of the circumferential direction misalignment prevention piece 24 in the second positioning tool 21 is faced to between the end faces of both sensor holders 2, 3, and a pair of side face plates 26 are disposed in tight contact with both side faces of the sensor holder 2, 3 on the open side, respectively.

In this state, the clamping screw 10 is disposed in the screw insertion recess 7, and using a clamping tool, such as a hex wrench, or the like, the clamping screw 10 is driven in into the threaded through hole 6 and screw accepting hole 8 to clamp and fix the projection piece 24b between the end faces of both sensor holders 2, 3.

Thus, by said both side face plates 26, any misalignment in the direction along the thickness between both side faces of the sensor holders 2, 3 on the open side that would be caused in driving in the clamping screw 10 is positively prevented.

In addition, the projection piece 24b of the circumferential direction misalignment prevention piece 24 which has been clamped and fixed between the end faces of both sensor holders 2, 3 causes the end faces of both sensor holders 2, 3 to have a definite spacing therebetween that is determined by the thickness of the projection piece 24b and to be parallel with each other. This results in the positions of the end faces of both sensor holders 2, 3 in the circumferential direction being kept definite, and thus the positions of the strain sensors 5 in the circumferential direction that are held by both sensor holders 2, 3, respectively, being also kept definite.

In this way, the first positioning tool 11 and second positioning tool 21 prevent misalignment (in a stepwise form, or the like) in the direction along the thickness of both sensor holders 2, 3, and misalignment in the circumferential direction, which results in misalignment and twist in the direction along the thickness and the circumferential direction of the strain sensors 5 which are held by both sensor holders 2, 3, respectively, being positively prevented. This allows the output of the strain sensor 5 to be stabilized, and the strain sensor 5 and the protection film 5a to be protected against damage.
As a result of this, a mold clamping force measuring sensor 1 which can measure the mold clamping force applied to the tie bar 50 with high accuracy can be realized.

Thus, according to the present exemplary embodiment, with the first positioning tool 11 and second positioning tool 21, motion in the direction of screw turn that is inevitably caused in clamping the clamping screw 10 at the time of installing both sensor holders 2, 3 on the tie bar 50 can be suppressed or prevented. This allows the installed posture of both sensor holders 2, 3 to be stabilized; the reliability of the output of the strain sensor 5 to be improved; and the possible failure of the protection film 5a to be prevented, and further allows the working efficiency at the time of installing the mold clamping force measuring sensor 1 to be improved.

### (Exemplary embodiment 2)

With reference to FIG. 8 to FIG. 13, a mold clamping force measuring sensor 1A of an exemplary embodiment 2 pertaining to the present invention will be described. The same elements as those of the mold clamping force measuring sensor 1 in the exemplary embodiment 1 will be provided with the same reference numerals and signs for explanation.

A mold clamping force measuring sensor 1A pertaining to the present exemplary embodiment 2 has sensor holders 2, 3 similar to those in said exemplary embodiment 1, and as shown in FIG. 8 to FIG. 10 and FIG. 11 to FIG. 13, features that, at each opposite end part of said both sensor holders 2, 3 on the respective hinged side and open side, substantially square plate-like positioning keys 31, 41 of one-pair configuration are disposed.

In other words, on the hinged side of both sensor holders 2, 3, as shown in FIG. 8 to FIG. 10, the positioning keys 31 (shown with oblique lines) of one-pair configuration are disposed in positions on both sides of the clamping screw 10, and on the open side of both sensor holders 2, 3, as shown in FIG. 11 to FIG. 13, the positioning keys 41 (shown with oblique lines) of one-pair configuration are disposed in positions on both sides of the clamping screw 10.

As shown in FIG. 8 and FIG. 9, positioning keys 31 are fixed to the opposite end part of the sensor holder 2 on the hinged side, being disposed in parallel with each other in positions on both sides of the threaded through hole 6, with the respective one end parts thereof being fitted into a pair of keyways provided along the circumferential direction.

In addition, in installing the mold clamping force measuring sensor 1A on the tie bar 50, the other end parts of the positioning keys 31 that project outward from the opposite end part are removably fitted into a pair of keyways 3a which are provided at the opposite end part of the sensor holder 3 on the hinged side, being disposed in positions corresponding to the keyways.

As shown in FIG. 11 and FIG. 12, the positioning keys 41 are fixed to the opposite end part of the sensor holder 2 on the open side, being disposed in parallel with each other in positions on both sides of the threaded through hole 6, with the respective one end parts thereof being fitted into a pair of keyways provided along the circumferential direction.

In addition, in installing said mold clamping force measuring sensor 1A on said tie bar 50, the other end parts of the positioning keys 41 that project outward from the opposite end part are removably fitted into a pair of keyways 3b which are provided at the opposite end part of the sensor holder 3 on the open side, being disposed in positions corresponding to said keyways.

As shown in FIG. 11, the positioning key 41 has a projection part 41a on the outer edge side for prevention of misalignment in the circumferential direction, and in correspondence thereto, a receiving shouldered part 3c is provided on the inner circumference side of the keyway 3b.

According to the mold clamping force measuring sensor 1A pertaining to the present exemplary embodiment 2 that is configured as above, at each opposite end part of both sensor holders 2, 3 on the hinged side and the open side, respectively, the substantially square plate-like positioning keys 31, 41 of one-pair configuration are disposed along the circumferential direction, which allows misalignment in the direction along the thickness of both sensor holders 2, 3 at the time of driving in the clamping screw 10 to be positively prevented.

In addition, the other end of the positioning key 41 which is fitted into the sensor holders 2, 3 at the opposite end part of the sensor holders 2, 3 on the open side is provided with a projection part 41a on the outer edge side thereof for prevention of misalignment in the circumferential direction. This results in the positions of the end faces of both sensor holders 2, 3 in the circumferential direction being kept definite, and thus the positions of the strain sensors 5 in the circumferential direction that are held by both sensor holders 2, 3, respectively, being also kept definite.

In this way, as is the case with the exemplary embodiment 1, the positioning keys 31, 41 prevent misalignment (in a stepwise form, or the like) in the direction along the thickness of both sensor holders 2, 3, and misalignment in the circumferential direction, which results in misalignment and twist in the direction along the thickness and the circumferential direction of the strain sensors 5 which are held by both sensor holders 2, 3, respectively, being positively prevented. This allows the output of the strain sensor 5 to be stabilized, and the strain sensor 5 and the protection film 5a to be protected against damage. As a result of this, a mold clamping force measuring sensor 1 which can measure the mold clamping force applied to the tie bar 50 with high accuracy can be realized.

Thus, according to the present exemplary embodiment, with the positioning keys 31, 41, motion in the direction of screw turn that is inevitably caused in clamping the clamping screw 10 at the time of installing both sensor holders 2, 3 on the tie bar 50 can be suppressed or prevented. This allows the installed posture of both sensor holders 2, 3 to be stabilized; the reliability of the output of the strain sensor 5 to be improved; and the possible failure of the protection film 5a to be prevented, and further allows the working efficiency at the time of installing the mold clamping force measuring sensor 1 to be improved.

In the exemplary embodiments 1, 2 as described above, it has been assumed that both sensor holders 2, 3 are of a semielliptical annulus-like configuration. However, if it is assumed that both sensor holders 2, 3 are of a semicircular annulus-like configuration, respectively, and as a whole, the mold clamping force measuring sensor has a circular annulus-like geometry, the function and effects as described above will be provided on the basis of the configuration similar to that of the mold clamping force measuring sensor 1, 1A.

The present invention is applicable to a wide range of equipment including that for measurement of the mold clamping force imposed on the tie bar for a mold clamping apparatus as described above, and that for measurement of stress which is imposed on a columnar member or a cylindrical member.

### Explanation of reference numerals and signs in the drawings

1: Mold clamping force measuring sensor
1A : Mold clamping force measuring sensor
2: Sensor holder
3: Sensor holder
3a: Keyway
3b: Keyway
3c: Receiving shouldered part
4: Hinge
4a: Setscrew
5: Strain sensor
5a: Protection film
5b: Signal cable
6: Threaded through hole
7: Screw insertion recess
7a: Recessed part
7b: Top surface of threaded through hole
8: Screw accepting hole
9: Elastic rubber piece
10: Clamping screw
11: First positioning tool
12: End block
12a: End face
13: Screw
14: Screw insertion hole
15: Projection piece
16: Side face screw
17: Side face plate
21: Second positioning tool
22: End block
23: Screw
24: Circumferential direction misalignment prevention piece
24a: Bottom piece
24b: Projection piece
25: Side face screw
26: Side face plate
31: Positioning key
41: Positioning key
41a: Projection part
50: Tie bar

## Claims

1. A mold clamping force measuring sensor comprising one square bar-like and semielliptical or semicircular annulus-like sensor holder (2) which holds a measuring element (5) facing the internal circumferential surface thereof, and another square bar-like and semielliptical or semicircular annulus-like sensor holder (3) which holds another measuring element (5) facing the internal circumferential surface thereof, said sensor holders (2,3) being openably connected by a hinge (4) at one end side thereof called the hinged side, to provide an elliptical or circular annulus-like configuration as a whole, both said sensor holders (2,3) being arranged to be installed on the outer circumference of a tie bar (50); and at each opposite end part on the hinged side and the other end side called the open side, a clamping screw (10) is driven in to clamp and fix the mold clamping force measuring sensor on the outer circumference of the tie bar (50) for measuring the mold clamping force applied to the tie bar (50) with said measuring element (5), wherein
a first positioning tool (11) is provided on said hinged side and comprises an end block (12) which is located outside of said hinge (4), having a thickness equivalent to that of the sensor holder (2,3); a projection piece (15) for drop prevention that is projected from said end block (12), and is clamped and fixed by a clamping screw (13); and a pair of side face plates (17) which are fixed to both side faces of said end block (12) and are tightly contacted with both side faces of said sensor holders (2,3), and
a second positioning tool (21) is provided on said open side and comprises an end block (22) which is located outside of the end parts of both said sensor holders (2,3),
having a thickness equivalent to that of the sensor holder (2,3); a circumferential direction misalignment prevention piece (24) which is faced to between the end faces of both sensor holders (2,3) and is clamped and fixed by a clamping screw (23); and a pair of side face plates (26) which are fixed to both side faces of said end block (22), and are tightly contacted with both side faces of said sensor holders (2,3).

2. A mold clamping force measuring sensor as claimed in claim 1, wherein, in the vicinity of both end faces of said one sensor holder (2), is provided a screw insertion recess (7) communicating with a threaded through hole (6) penetrating the end face, respectively, and in both end faces of said other sensor holder (3), is provided a screw accepting hole (8) opposed to the threaded through hole (6) provided in said one sensor holder (2), respectively; each of said measuring elements (5) is a strain sensor; said clamping screw (10) is driven in from the side of said threaded through hole (6) to the side of said screw accepting hole (8) to clamp and fix the mold clamping force measuring sensor on the outer circumference of the tie bar (50); said projection piece (15) has a screw insertion hole (14) and is butted against the top surface of the threaded through hole (6) in the screw insertion recess (7), and said clamping screw (13) penetrates through said screw insertion hole (7); and said circumferential direction misalignment prevention piece (24) is carried by said end block (22) of said second positioning tool (21).

3. A mold clamping force measuring sensor as claimed in claim 2, wherein said strain sensors (5) are held respectively in central portions of said sensor holders (2,3) and each comprises a strain gage facing the internal circumferential surface; the end block (12) of said first positioning tool (11) is located outside of said hinge (14); said projection piece (15) is screw-fastened to the end block (12) of said positioning tool (11), has a screw insertion hole (14) and is butted against the top surface (7b) of the threaded through hole in the screw insertion recess (7), and is clamped and fixed by said clamping screw (13) penetrating through said screw insertion hole (14); and said pair of side face plates (17) is screw-fastened to said end block (12) of said first positioning tool (11); the end block (22) of said second positioning tool (21) is located outside of said hinge (4); said circumferential direction misalignment prevention piece (24) is screw-fastened to the end block (22) of said second positioning tool (21); and said pair of side face plates (26) is screw-fastened to said end block (22) of said second positioning tool (21).

4. A mold clamping force measuring sensor comprising one square bar-like and semielliptical or semicircular annulus-like sensor holder (2) which holds a measuring element (5) facing the internal circumferential surface thereof, and another square bar-like and semielliptical or semicircular annulus-like sensor holder (3) which holds another measuring element (5) facing the internal circumferential surface thereof, said sensor holders (2,3) being openably connected by a hinge (4) at one end side thereof, called the hinged side, to provide an elliptical or circular annulus-like configuration as a whole, both said sensor holders (2,3) being arranged to be installed on the outer circumference of a tie bar (50); at each opposite end part on the hinged side and the other end side, called the open side, a clamping screw (10) is driven in to clamp and fix the mold clamping force measuring sensor on the outer circumference of the tie bar (50) for measuring the mold clamping force applied to the tie bar (50) with said measuring element (5), wherein
at each opposite end part on said respective hinged side and open side, positioning keys (31,41) of one-pair configuration that connect between the opposite end parts, being disposed on both sides of said clamping screw (10), are installed.

5. A mold clamping force measuring sensor as claimed in claim 4, wherein, in the vicinity of both end faces of said one sensor holder (2), is provided a screw insertion recess (7) communicating with a threaded through hole (6) penetrating the end face, respectively, and in both end faces of said other sensor holder (3), is provided a screw accepting hole (8) opposed to the threaded through hole (6) provided in said one sensor holder (2), respectively; each of said measuring elements (5) is a strain sensor; said clamping screw (10) is driven in from the side of said threaded through hole (6) to the side of said screw accepting hole (8) to clamp and fix the mold clamping force measuring sensor on the outer circumference of the tie bar (50); said positioning keys (31,41) of one-pair configuration are fixed to the opposite end part on the side of one sensor holder (2) and are fitted into the opposite end part on the other sensor holder (3).

6. A mold clamping force measuring sensor as claimed in claim 4 or 5, wherein said positioning keys (41) on said open side have a projection part (41a) for prevention of misalignment in the circumferential direction on the outer edge side thereof facing the other sensor holder (3).
